# EUROPEAN PATENT SPECIFICATION

(11) **EP 4 082 796 B1**
(45) Date of publication and mention of the grant of the patent: **05.06.2024**
(21) Application number: 22168966.4
(22) Date of filing: 20.04.2022
(51) Int. Cl.: B41J 2/01, B41J 11/00, B41J 29/17, B08B 1/02, B08B 3/02, B65G 45/24, B08B 1/00, B08B 1/04, B08B 3/14, B41J 15/04

(54) **BELT CLEANING DEVICE AND INKJET RECORDING APPARATUS**
BANDREINIGUNGSVORRICHTUNG UND TINTENSTRAHLAUFZEICHNUNGSGERÄT
DISPOSITIF DE NETTOYAGE DE COURROIE ET APPAREIL D'ENREGISTREMENT À JET D'ENCRE

(30) Priority: 30.04.2021 JP 2021077879
(43) Date of publication of application: 02.11.2022
(73) Proprietor: KONICA MINOLTA, INC., Tokyo 100-7015 (JP)
(72) Inventor: MATSUMOTO, Taiki, Tokyo, 100-7015 (JP)
(74) Representative: MFG Patentanwälte Meyer-Wildhagen Meggle-Freund Gerhard PartG mbB

(56) References cited:
- EP-A1- 1 560 080
- EP-B1- 3 052 322
- JP-A- 2016 084 227
- KR-B1- 101 387 983
- US-A1- 2009 317 555

## Description

### Background

### Technological Field

The present invention relates to a belt cleaning device and an inkjet recording apparatus.

### Description of the Related art

An inkjet image recording apparatus records images on various recording media such as paper and fabric. In such an image recording apparatus, a recording medium is conveyed in close contact with a conveyance belt that is endless, and ink is injected from an inkjet head onto the recording medium to form a desired image thereon.

In such an inkjet image recording apparatus, the injected ink attaches onto the conveyance belt due to various reasons such as misfeeding of a recording medium, edgeless printing, and ink bleed-through. Further, use of fabric or the like as a recording medium may result in attachment of foreign matter such as thread waste on the conveyance belt.

Thus, the inkjet image recording apparatus is provided with a belt cleaning device for removal of ink and foreign matter attached on the conveyance belt. JP 2012-116617 A discloses a belt cleaning device included in an inkjet recording apparatus, and the belt cleaning device includes a plurality of cleaning means and a cleaning-liquid supply means provided for each cleaning means. According to JP 2012-116617, a roller brush provided as the cleaning means in the preceding stage, and a liquid absorbing roller is provided as the cleaning means provided downstream of the roller brush in the conveyance direction of the conveyance belt. According to JP 2012-116617, cleaning liquid is constantly supplied to a cleaning vat in which the roller brush is immersed and a cleaning vat in which the liquid absorbing roller is immersed.

However, a further increase in printing speed may result in insufficient washing capability in the invention described in JP 2012-116617.

JP 2016 084227 A discloses an inkjet recorder which discharges inks, and can record an image on a recording medium comprising recording means in which nozzles for discharging inks are formed, and an endless belt arranged at a lower side of the recording means. The inkjet recorder also comprising: transport means which rotates the endless belt to one direction, and makes the recording medium which is set on a transport face formed at an external peripheral face of the endless belt pass to the recording means from one end side, and in which a feed path for transportation to the other end side and a return path including a range in which the endless belt moves to one end side from the other end side are formed; and washing means composed of a first cleaning part which cleans the external peripheral face of the endless belt at the return path, and a second cleaning part which is arranged at a downstream position of the first cleaning part. Each cleaning part has washing rollers, and can independently adjust rotation numbers of the washing rollers.

US 2009/317555 A1 discloses a liquid application method that includes: an application liquid supplying step of supplying an application liquid to an outer circumferential surface of a roller member which is driven to rotate; a blade abutting step of abutting a blade member against the outer circumferential surface of the roller member so as to remove the application liquid supplied in the application liquid supplying step; and a blade abutment and separation control step of controlling an operation of abutting and an operation of separating the blade member in the blade abutting step.

KR 101 387 983 B1 discloses an apparatus for cleaning a conveying belt of a digital printing machine. The apparatus includes a main body which is provided to endlessly rotate the conveying belt, a cleaning unit for removing moisture from a surface of the conveying belt after cleaning the surface of the conveying belt with cleansing solution, and a residual moisture removing unit for removing residual moisture from the surface of the conveying belt once more again. Differently from the prior art, the present invention allows air to be secondarily provided on the conveying belt and dries the conveying belt at maximum by blowing hot air on the conveying belt after the conveying belt is washed with water and the moisture on the conveying belt is primarily removed, and removes foreign substances such as residual thread, which adheres to the conveying belt in cleaning the conveying belt with water, from the conveying belt, so that the conveying belt can be made to be clean at maximum.

EP 3 052 322 B1 discloses A recording apparatus comprising: a transport belt which is configured to transport a recording medium; a recording head which is configured to discharge ink onto the recording medium; and a cleaning portion for the transport belt, wherein the recording apparatus is configured to have a first cleaning mode in which the cleaning portion cleans the transport belt during transporting of the recording medium by the transport belt, and a second cleaning mode in which the cleaning portion cleans the transport belt during a period except for transporting of the recording medium by the transport belt, and wherein the cleaning portion includes a contact portion to contact the transport belt and a removing portion for removing a cleaning agent applied to the transport belt, and wherein the recording apparatus is configured such that, in the second cleaning mode, the transport belt is cleaned in a state where the transport belt is intermittently moved.

### Summary

Therefore, an object of the present invention is to provide a belt cleaning device capable of more reliably removing residues remaining on a conveyance belt even in an inkjet recording apparatus capable of high-speed printing. Another object of the present invention is to provide an inkjet recording apparatus including the belt cleaning device.

According to a first aspect the present invention provides a belt cleaning device in accordance with independent claim 1. According to a second aspect the present invention provides an inkjet recording apparatus in accordance with pseudo-dependent claim 6. Further aspects are set forth in the dependent claims, the drawings and the following description.

To achieve at least one of the abovementioned objects, according to an aspect of the present invention, a belt cleaning device configured to wash a placement face of a conveyance belt endless, the conveyance belt being configured to convey a recording medium placed on the placement face due to circumferential movement of the conveyance belt, reflecting one aspect of the present invention comprises: a plurality of washers configured to wash the placement face of the conveyance belt while supplying washing liquid to the placement face of the conveyance belt; a plurality of collectors provided so as to collect the washing liquid supplied to the placement face of the conveyance belt by at least one of the plurality of washers; and a plurality of removal members provided for the plurality of collectors, the plurality of removal members each being disposed downstream of the corresponding washer in a circumferential direction of the conveyance belt, the plurality of removal members each being configured to remove a residue remaining on the placement face of the conveyance belt.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a schematic configuration view of an inkjet recording apparatus according to a first embodiment of the present invention;
Fig. 2 is a schematic configuration view of an inkjet recording apparatus according to a second embodiment of the present invention;
Fig. 3 is a schematic configuration view of an inkjet recording apparatus according to a third embodiment of the present invention; and
Fig. 4 is a schematic configuration view of an inkjet recording apparatus according to a fourth embodiment of the present invention.

### Detailed Description of Embodiments

Hereinafter, one or more embodiments of the present invention will be described with reference to the drawings. However, the scope of the invention is not limited to the disclosed embodiments. In the drawings described below, common members are denoted with the same reference signs.

### <1. First Embodiment>

### 1-1. Inkjet Recording Apparatus

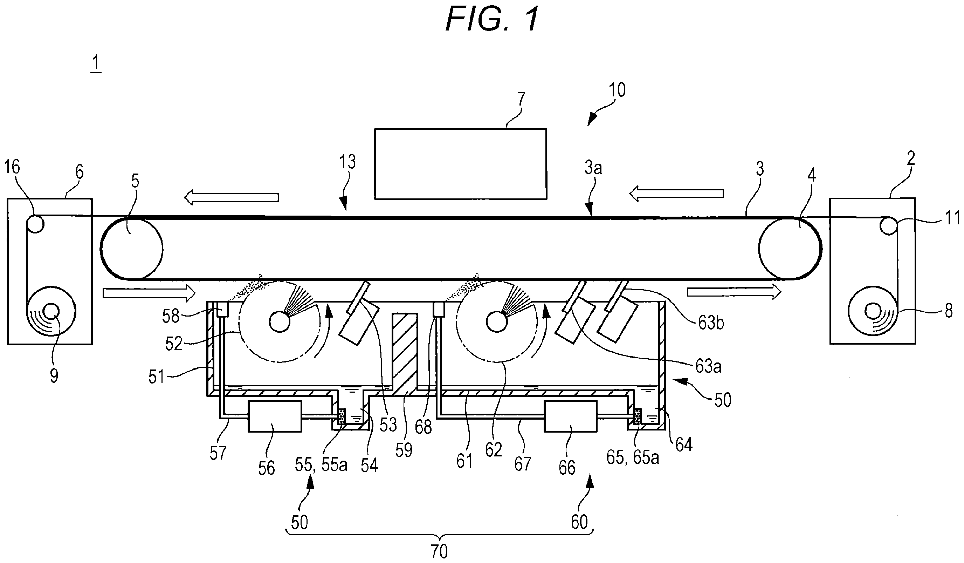

Fig. 1 is a schematic configuration view of an inkjet recording apparatus 1 according to a first embodiment of the present invention. As illustrated in Fig. 1, the inkjet recording apparatus 1 of the present embodiment includes a sheet feeding device 2, an inkjet-recording-apparatus main body 10, and a sheet discharge device 6. The inkjet recording apparatus 1 of the present embodiment is applicable to various print media capable of fixing ink landed on the sheet-like main face, such as paper, fabric, and a resin film, as a recording medium. Described will be a case where a rolled recording medium is used for the sheet feeding device 2 of the inkjet recording apparatus 1 of the present embodiment.

### [Sheet Feeding Device]

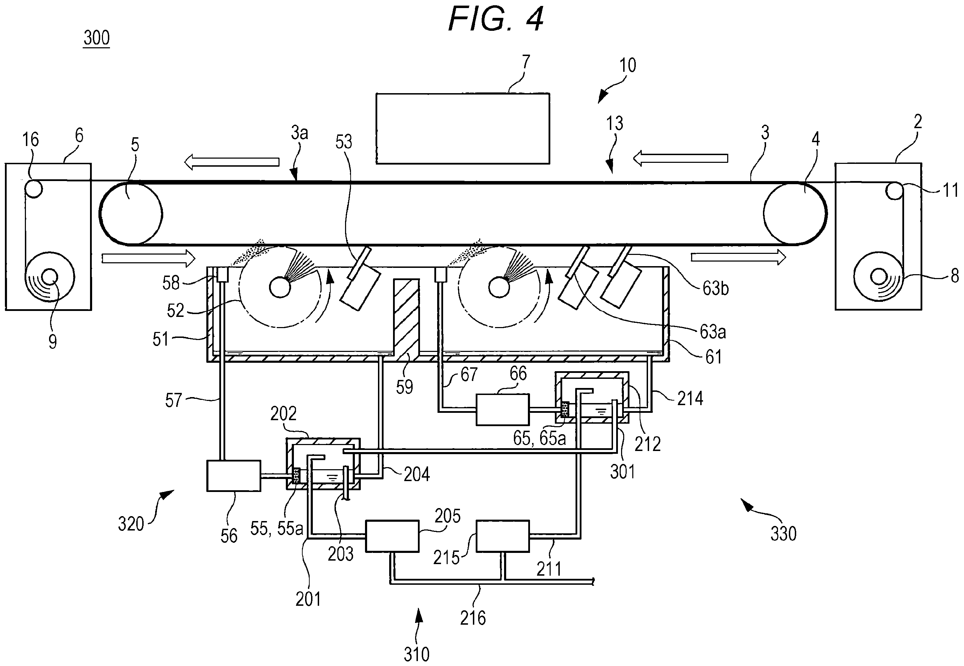

The sheet feeding device 2 includes a roll-sheet setter 8. The roll-sheet setter 8 has a support shaft and a desired recording medium is rotatably wound around the support shaft. Further, the sheet feeding device 2 includes a sheet conveyor (not illustrated) including a plurality of conveyance rollers 11 (only one illustrated in Fig. 1) is provided closer to the inkjet-recording-apparatus main body 10 than the roll-sheet setter 8 is. The sheet conveyor of the sheet feeding device 2 conveys the recording medium set to the roll-sheet setter 8 to the inkjet-recording-apparatus main body 10 side. Such conveyance is controlled by a controller (see Fig. 4).

### [Inkjet-Recording-Apparatus Main Body]

The inkjet-recording-apparatus main body 10 includes a belt conveyance device 13, a recording head 7, and a belt cleaning device 70.

The belt conveyance device 13 includes a driving roller 4, a driven roller 5, and a conveyance belt 3 that is endless and stretched around the driving roller 4 and the driven roller 5. The conveyance belt 3 circumferentially moves due to the rotation of the driving roller 4. The conveyance belt 3 having a predetermined width in a direction orthogonal to the circumferential direction has an outer circumferential face portion between the driving roller 4 and the driven roller 5, and the outer circumferential face portion serves as a placement face 3a (hereinafter, referred to as surface) for placing a recording medium thereon.

The conveyance belt 3 has the surface provided with an adhesive layer (not illustrated) for bringing a recording medium into close contact with the surface. The adhesive layer is formed by application of an adhesive called a printing agent to the surface of the conveyance belt 3. As the adhesive, used is an adhesive resin such as a water-soluble resin, a pressure-sensitive resin, or a heat-sensitive resin.

The belt conveyance device 13 conveys, in the circumferential direction of the conveyance belt 3, the recording medium conveyed from the sheet feeding device 2 and supplied on the placement face 3a of the conveyance belt 3 with adhered on the placement face 3a. Then, on the recording medium conveyed by the conveyance belt 3, a desired image is formed at a position facing the recording head 7. Then, the belt conveyance device further conveys the recording medium with the desired image formed thereon to the sheet discharge device 6 side.

The recording head 7 is spaced apart, with a predetermined interval, from the placement face 3a with the recording medium placed thereon at the position opposite to the belt conveyance device 13. The recording head 7 includes a plurality of ink heads (not illustrated), and the face of each ink head facing the belt conveyance device 13 is provided with a nozzle face (not illustrated). The recording head 7 injects ink from the nozzles of the nozzle faces to record the desired image on the recording medium conveyed by the belt conveyance device 13.

The belt cleaning device 70 is disposed near the conveyance belt 3 of the belt conveyance device 13. In the present embodiment, the belt cleaning device 70 is disposed between the driving roller 4 and the driven roller 5. Further, the belt cleaning device 70 is disposed downstream of the sheet discharge device 6 in the circumferential direction of the conveyance belt 3 (the direction indicated by the solid-white arrows in Fig. 1). That is, the belt cleaning device 70 is disposed at a position where the surface of the conveyance belt 3 after delivering, at the belt conveyance device 13, the recording medium to the sheet discharge device 6 side can be cleaned.

The belt cleaning device 70 is provided with a plurality of members for cleaning the surface of the conveyance belt 3 along the circumferential direction of the conveyance belt 3. The configuration of the belt cleaning device 70 will be described in detail later.

### [Sheet Discharge Device]

The sheet discharge device 6 is disposed downstream of the belt conveyance device 13 in the conveyance direction of the recording medium, and includes a winder 9 that winds the recording medium discharged from the belt conveyance device 13 side. Further, the sheet discharge device 6 includes a sheet conveyor (not illustrated) including a plurality of conveyance rollers 16 (only one illustrated in Fig. 1) located closer to the belt conveyance device 13 than the winder 9 is. The recording medium discharged from the belt conveyance device 13 side is conveyed to the winder 9 side by the sheet conveyor, and the winder 9 winds the conveyed recording medium into a roll shape at an appropriate timing.

In the present embodiment, the recording medium wound in a roll shape is given as an example; however, a recording medium cut into a predetermined size or a folded recording medium can be used.

Note that in the present embodiment, the inkjet recording apparatus 1 includes the sheet feeding device 2 and the sheet discharge device 6; however, the sheet feeding device 2 and the sheet discharge device 6 may be provided as separate units.

### 1-2. Belt Cleaning Device

Next, the belt cleaning device 70 of the present embodiment will be described. The belt cleaning device 70 of the present embodiment includes a first cleaner 50 and a second cleaner 60.

In the present embodiment, the first cleaner 50 includes a first collector 51, a first sprayer 58, a first brush roller 52, a first scraper 53, a first storage 54, and a first feeder 56. In the present embodiment, the first sprayer 58 and the first brush roller 52 are provided as a washer in the claims. In addition, the first scraper 53 is provided as an exemplary removal member in the claims.

The first collector 51 is a vat-shaped member opened on the conveyance belt 3 side, and capable of collecting the washing liquid dropped from the conveyance belt 3, the first sprayer 58, the first brush roller 52, and the first scraper 53 described later. Near the opening on the conveyance belt 3 side of the first collector 51, the first sprayer 58, the first brush roller 52, and the first scraper 53 are disposed in this order from the upstream side to the downstream side in the circumferential direction of the conveyance belt 3.

The first sprayer 58 includes a nozzle bridged over the entire width in the width direction orthogonal to the circumferential direction of the conveyance belt 3. The nozzle of the first sprayer 58 is provided at a position facing the surface of the conveyance belt 3, and ejects, from the nozzle to the surface of the conveyance belt 3, the washing liquid supplied from a first spray pipe 57. In the present embodiment, for example, the washing liquid is ejected from the nozzle of the first sprayer 58 to a region between the first brush roller 52 described later and the conveyance belt 3. The foreign matter attached to the surface of the conveyance belt 3 is washed with the washing liquid ejected from the first sprayer 58, and the washing liquid enhances the washing effect on the conveyance belt 3 by the first brush roller 52 disposed at the subsequent stage. The washing liquid supplied from the first sprayer 58 to the conveyance belt 3 drops into the first collector 51.

The first brush roller 52 (brush in the claims) is provided downstream of the first sprayer 58 in the circumferential direction of the conveyance belt 3. The first brush roller 52 is a roller-like brush and includes a rotary shaft provided with a bundle of brushes. The rotary shaft is bridged over the entire width in the width direction orthogonal to the circumferential direction of the conveyance belt 3. The first brush roller 52 is disposed such that the tip of the brush is in contact with the surface of the conveyance belt 3. The first brush roller 52 constantly rotates in contact with the surface of the conveyance belt 3.

For example, the first brush roller 52 rotates in a direction opposite to the movement direction of the conveyance belt 3 at a position in contact with the conveyance belt 3, and the brush slides on the surface of the conveyance belt 3 while being rotationally driven at a predetermined speed. As a result, the foreign matter washed with the washing liquid sprayed by the first sprayer 58 is removed from the surface of the conveyance belt 3. The washing liquid containing the foreign matter removed by the first brush roller 52 drops into the first collector 51.

The first scraper 53 is provided downstream of the first brush roller 52 in the circumferential direction of the conveyance belt 3. The first scraper 53 includes a tabular member including an elastic member such as rubber and a polyethylene terephthalate (PET) sheet and is bridged over the entire width in the width direction orthogonal to the circumferential direction of the conveyance belt 3. The tip of the first scraper 53 is disposed so as to be in contact with the surface of the conveyance belt 3, and is provided so as to be able to scrape off the washing liquid and the foreign matter remaining on the conveyance belt 3. The washing liquid containing the foreign matter scraped off the surface of the conveyance belt 3 by the first scraper 53 drops into the first collector 51.

The first storage 54 is provided on the bottom face side of the first collector 51 so as to be able to store the washing liquid containing the foreign matter dropped in the first collector 51. The first storage 54 is provided with a discharger 55 connected to the first spray pipe 57. The discharger 55 is provided with a filter 55a for removing the foreign matter, and the washing liquid stored in the first storage 54 is discharged to first spray pipe 57 side through the filter 55a.

The first feeder 56 is provided partway the first spray pipe 57 connected from the first storage 54 to the first sprayer 58. The first feeder 56 includes a feeding pump, and feeds the washing liquid discharged from the first storage 54 to the first sprayer 58. In the present embodiment, the washing liquid ejected from the first sprayer 58 to the conveyance belt 3 is dropped into the first collector 51, and then reused by respraying from the first sprayer 58 through the first storage 54 and the first feeder 56.

The second cleaner 60 is provided downstream of the first cleaner 50 in the circumferential direction of the conveyance belt 3. The second cleaner 60 includes a second collector 61, a second sprayer 68, a second brush roller 62, a second scraper 63a, an auxiliary scraper 63b, a second storage 64, and a second feeder 66. In the present embodiment, the second sprayer 68 and the second brush roller 62 are provided as a washer in the claims. The second scraper 63a is provided as an exemplary removal member in the claims, and the auxiliary scraper 63b is provided as an exemplary auxiliary removal member in the claims.

The second collector 61 is disposed downstream of the first collector 51 in the circumferential direction of the conveyance belt 3. In the present embodiment, a single vat is divided into two regions by a separator 59, and the one region and the other regions are provided, respectively, as the first collector 51 and the second collector 61 independent in the circumferential direction of the conveyance belt 3.

Similarly to the first collector 51, the second collector 61 is a vat opened on the conveyance belt 3 side, and capable of storing the washing liquid dropped from the conveyance belt 3, and the second sprayer 68, the second brush roller 62, the second scraper 63a, and the auxiliary scraper 63b described later. Near the opening on the conveyance belt 3 side of the second collector 61, the second sprayer 68, the second brush roller 62, the second scraper 63a, and the auxiliary scraper 63b are disposed in this order in the circumferential direction of the conveyance belt 3.

The second sprayer 68, the second brush roller 62, the second scraper 63a, the second storage 64, and the second feeder 66 of the second cleaner 60 are, respectively, similar in configuration to the first sprayer 58, the first brush roller 52, the first scraper 53, the first storage 54, and the first feeder 56, and thus redundant description thereof will be omitted. Further, a discharger 65 that the second storage 64 is provided with, a filter 65a that the discharger 65 is provided with, and a second spray pipe 67 are, respectively, similar in configuration to the discharger 55 that the first storage 54 is provided with, the filter 55a that the discharger 55 is provided with, and the first spray pipe 57, and thus redundant description thereof will be omitted.

The auxiliary scraper 63b is provided downstream of the second scraper 63a is in the circumferential direction of the conveyance belt 3. The auxiliary scraper 63b includes a tabular member including an elastic member such as rubber and a PET sheet, and is bridged over the entire width in the width direction orthogonal to the circumferential direction of the conveyance belt 3. Further, the tip of the auxiliary scraper 63b is disposed so as to be in contact with the surface of the conveyance belt 3.

The auxiliary scraper 63b that the second cleaner 60 is provided with is capable of removing the washing liquid and the foreign matter on the surface of the conveyance belt 3 unremoved by the second scraper 63a. With this arrangement, the surface of the conveyance belt 3 can be made cleaner.

In the present embodiment, in the first cleaner 50, the first brush roller 52 washes the surface of the conveyance belt 3 and then the first scraper 53 scrapes off the washing liquid and the foreign matter. This arrangement enables prevention of movement of the contaminated washing liquid to the second collector 61 side. Thereafter, furthermore, in the second cleaner 60, the second brush roller 62 washes the surface of the conveyance belt 3 and then the second scraper 63a and the auxiliary scraper 63b scrape off the washing liquid and the foreign matter. With this arrangement, the conveyance belt 3 can be subjected to the washing process twice, resulting in more reliable removal of dirt such as thread waste and ink attached on the conveyance belt 3.

In a case where the speed of the conveyance belt 3 increases due to an increase in printing speed, only washing by the first cleaner 50 may be insufficient to remove such foreign matter. However, in the present embodiment, even in a case where the foreign matter unremoved by the first cleaner 50 remains on the surface of the conveyance belt 3, the second brush roller 62 can remove the foreign matter with the washing liquid resprayed in the second cleaner 60. Further, in the present embodiment, the auxiliary scraper 63b is provided at the subsequent stage of the second scraper 63a in the second cleaner 60. This arrangement enables more reliable removal of the washing liquid remaining on the surface of the conveyance belt 3.

Furthermore, in the present embodiment, the first collector 51 and the second collector 61 are independently provided in the first cleaner 50 and the second cleaner 60. With this arrangement, the washing liquid used by the first cleaner 50 is collected by the first collector 51 and circulated only in the first cleaner 50, and the washing liquid used by the second cleaner 60 is collected by the second collector 61 and circulated only in the second cleaner 60. The washing liquid used by the first cleaner 50 is more likely to be dirty than that used by the second cleaner 60, and thus foreign matter is more intruded. Thus, the independency in structure of the first collector 51 and the second collector 61 enables circulation, in the second cleaner 60, of the washing liquid cleaner than that in the first cleaner 50. Therefore, in comparison with use of a vat with a first collector 51 and a second collector 61 connected each other, the conveyance belt 3 can be washed more cleanly.

Still furthermore, in the present embodiment, the first collector 51 is provided with the first scraper 53. This arrangement enables prevention of movement of the washing liquid attached on and the contaminated with the conveyance belt 3 to the second collector 61 side of the second cleaner 60. Thus, the washing liquid stored in the second collector 61 of the second cleaner 60 can be maintained cleaner than that stored in the first collector 51.

In the present embodiment, the first brush roller 52 and the second brush roller 62 rotate in the direction opposite to the movement direction of the conveyance belt 3 at the position in contact with the conveyance belt 3, but this is not limitative. Thus, the first brush roller 52 and the second brush roller 62 may rotate in the same direction. Further, in the present embodiment, the brush rollers are each provided as a washer. However, for example, a plurality of cup brushes each holding brush bristles bundled in a cup member may be disposed, or various washers are applicable.

Furthermore, in the present embodiment, given has been the example in which the first scraper 53 and the second scraper 63a each including the scraper are provided as removal members and the auxiliary scraper 63b including the other scraper is used as the auxiliary removal member, but this is not limitative. The removal members and the auxiliary removal member may be each a roller-like absorbing roller including a material having liquid absorbing property such as sponge.

Still furthermore, in the present embodiment, the washing liquid dropped in the first collector 51 and the washing liquid dropped in the second collector 61 are, respectively, resprayed from the first sprayer 58 and the second sprayer 68 to the conveyance belt 3. The method of supplying washing liquid to the conveyance belt 3, however, is not limited thereto. Hereinafter, given will be exemplary methods different in supply of washing liquid to the conveyance belt 3.

### <2. Second Embodiment>

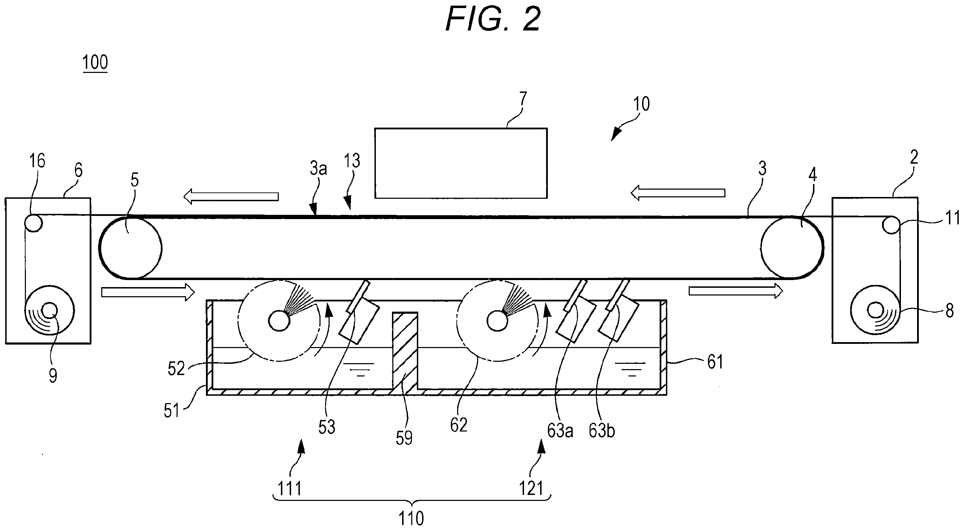

Fig. 2 is a schematic configuration view of an inkjet recording apparatus 100 according to a second embodiment of the present invention. In the example, the inkjet recording apparatus 100 of the present embodiment is different from the inkjet recording apparatus 1 according to the first embodiment in terms of a method of supplying washing liquid to a conveyance belt 3 at a belt cleaning device 110. In Fig. 2, components corresponding to those in Fig. 1 are denoted with the same reference signs, and redundant description thereof will be omitted.

The belt cleaning device 110 in the present embodiment includes a first cleaner 111 and a second cleaner 121. The first cleaner 111 includes a first collector 51, and a first brush roller 52 and a first scraper 53 provided in this order from the upstream side to the downstream side in the circumferential direction of the conveyance belt 3 in the first collector 51. Washing liquid is stored in the first collector 51, and the lower portion of the first brush roller 52 opposite to the portion of the first brush roller 52 abutting on the conveyance belt 3 is partially immersed in the washing liquid. In the present embodiment, the first brush roller 52 is provided as a washer in the claims.

The second cleaner 121 includes a second collector 61, and a second brush roller 62, a second scraper 63a, and an auxiliary scraper 63b provided in this order from the upstream side to the downstream side in the circumferential direction of the conveyance belt 3 in the second collector 61. Similarly to the first collector 51, washing liquid is stored in the second collector 61, and the lower portion of the second brush roller 62 opposite to the portion of the second brush roller 62 abutting on the conveyance belt 3 is partially immersed in the washing liquid. In the present embodiment, the second brush roller 62 is provided as a washer in the claims.

In the present embodiment, in the first cleaner 111, the first brush roller 52 abuts on the conveyance belt 3 while scraping up the washing liquid during rotation, so that the washing liquid is supplied to the conveyance belt 3. Thus, in the present embodiment, the washing liquid is supplied to the conveyance belt 3 and the foreign matter attached on the conveyance belt 3 is removed at the first brush roller 52.

Also in the second cleaner 121, similarly to the first cleaner 111, the second brush roller 62 abuts on the conveyance belt 3 while scraping up the washing liquid during rotation, so that the washing liquid is supplied to the conveyance belt 3. Thus, also in the second cleaner 121, similarly to the first cleaner 111, the washing liquid is supplied to the conveyance belt 3 and the foreign matter attached on the conveyance belt 3 is removed at the second brush roller 62.

In the present embodiment, no requirement for a feeding pump simplifies the configuration of the belt cleaning device 110. Besides, effects similar to those of the first embodiment can be obtained.

### <3. Third Embodiment>

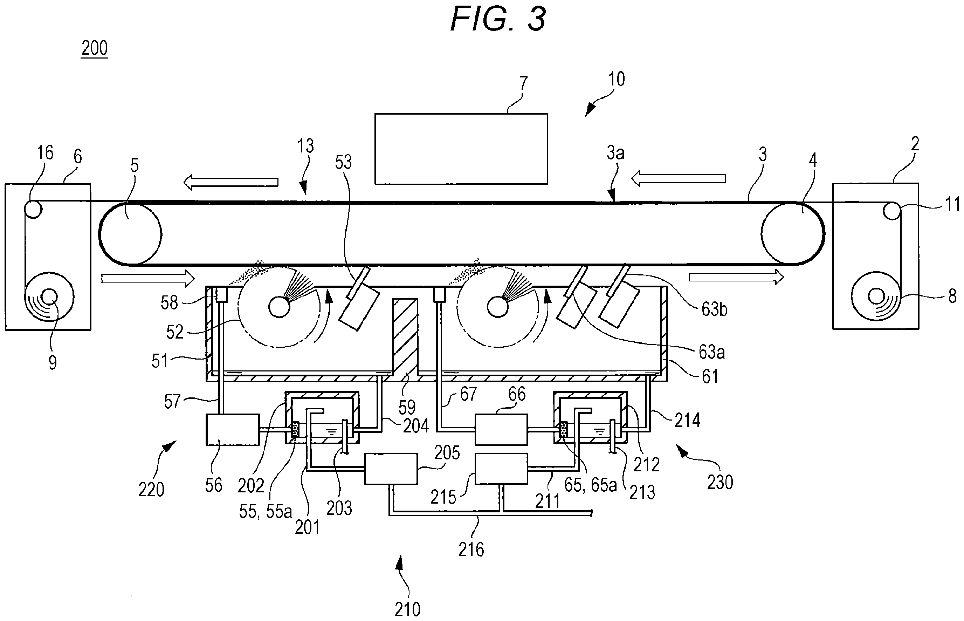

Fig. 3 is a schematic configuration view of an inkjet recording apparatus 200 according to a third embodiment of the present invention. In the example, the inkjet recording apparatus 200 of the present embodiment is different from the inkjet recording apparatus 1 according to the first embodiment in terms of a method of supplying washing liquid to a conveyance belt 3 at a belt cleaning device 210. In Fig. 3, components corresponding to those in Fig. 1 are denoted with the same reference signs, and redundant description thereof will be omitted.

The belt cleaning device 210 in the present embodiment includes a first cleaner 220 and a second cleaner 230. The first cleaner 220 includes a first collector 51, a first sprayer 58, a first brush roller 52, and a first scraper 53 provided in this order from the upstream side to the downstream side in the circumferential direction of the conveyance belt 3 in the first collector 51. Further, the first cleaner 220 includes a first reservoir 202, a first flow-rate adjuster 205, and a first feeder 56. Furthermore, the first cleaner 220 includes a first discharge pipe 204, a first supply pipe 201, a first overflow pipe 203, and a first spray pipe 57.

While adjusting the flow rate of the washing liquid supplied from a washing-liquid supply tank (not illustrated) through a washing-liquid supply pipe 216, the first flow-rate adjuster 205 supplies the washing liquid to the first supply pipe 201 side. The first supply pipe 201 has one end connected to the first flow-rate adjuster 205 and the other end is provided inside the first reservoir 202. The washing liquid discharged to the first supply pipe 201 side is supplied from the first supply pipe 201 to the first reservoir 202.

The first reservoir 202 is a container that stores the washing liquid sent from the first discharge pipe 204 and the washing liquid sent from the first supply pipe 201. The first supply pipe 201, the first overflow pipe 203, and the first spray pipe 57 are connected to the first reservoir 202. The first discharge pipe 204 has one end connected to the lower portion of the first collector 51 and the other end is connected to the first reservoir 202. With this arrangement, the washing liquid accumulated in the lower portion of the first collector 51 is constantly discharged to the first reservoir 202.

The first overflow pipe 203 has one end and the other end. The first overflow pipe 203 is disposed such that its axial direction is parallel to the vertical direction of the first reservoir 202 inside the first reservoir 202 on the one end side, and disposed such that the one end is located at a predetermined height from the low portion of the first reservoir 202. The other end of the first overflow pipe 203 is lower than the one end thereof in the vertical direction and is connected to a discharge tank (not illustrated).

In a case where the washing liquid is stored at a height not less than that of the one end of the first overflow pipe 203 in the first reservoir 202, the washing liquid is discharged to the discharge tank through the first overflow pipe 203. Thus, the washing liquid stored in the first reservoir 202 is maintained at the liquid level not more than that of the one end of the first overflow pipe 203.

Further, the washing liquid stored in the first reservoir 202 is sprayed from the first sprayer 58 to the surface of the conveyance belt 3 through the first feeder 56 and the first spray pipe 57.

Meanwhile, the second cleaner 230 includes a second collector 61, and a second sprayer 68, a second brush roller 62, a second scraper 63a, and an auxiliary scraper 63b provided in this order from the upstream side to the downstream side in the circumferential direction of the conveyance belt 3 in the second collector 61. Further, the second cleaner 230 includes a second reservoir 212, a second flow-rate adjuster 215, and a second feeder 66. Furthermore, the second cleaner 230 includes a second discharge pipe 214, a second supply pipe 211, a second overflow pipe 213, and a second spray pipe 67.

The second reservoir 212 and the second flow-rate adjuster 215 of the second cleaner 230 are, respectively, similar in configuration to the first reservoir 202 and the first flow-rate adjuster 205 of the first cleaner 220. Further, the second discharge pipe 214, the second supply pipe 211, and the second overflow pipe 213 of the second cleaner 230 are, respectively, similar in configuration to the first discharge pipe 204, the first supply pipe 201, and the first overflow pipe 203 of the first cleaner 220. The second flow-rate adjuster 215 is connected to the washing-liquid supply pipe 216.

Also in the second cleaner 230, similarly to the first cleaner 220, the flow rate of the washing liquid supplied from the washing-liquid supply tank (not illustrated) through the washing-liquid supply pipe 216 is adjusted at the second flow-rate adjuster 215, and then the washing liquid is discharged to the second supply pipe 211 side. The washing liquid discharged to the second supply pipe 211 side is supplied to the second reservoir 212. Also in the second cleaner 230, the washing liquid stored inside the second reservoir 212 is maintained at not less than a certain liquid level by the second overflow pipe 213. Then, the washing liquid stored in the second reservoir 212 is sprayed from the second spray pipe 67 to the surface of the conveyance belt 3 through the second feeder 66.

Here, each flow rate at the first flow-rate adjuster 205 and the second flow-rate adjuster 215 may be adjusted manually, or may be automatically varied depending on the degree of contamination of the washing liquid. When the flow rate is automatically varied depending on the degree of contamination of the washing liquid, for example, a concentration detector is provided to each of the first collector 51 and the second collector 61, and each flow rate is set to be variable in accordance with the degree of contamination. For example, if the degree of contamination is higher than a specified value, the flow rate is set to be higher than a reference value. Otherwise, if the degree of contamination is lower than the specified value, the flow rate is set to be lower than the reference value (or to be zero). Further, the flow rate at the first flow-rate adjuster 205 and the flow rate at the second flow-rate adjuster 215 may be different from each other or may be the same. In some cases, supply of new washing liquid from at least either the first supply pipe 201 or the second supply pipe 211 may be stopped.

In the present embodiment, new washing liquid is supplied to the first reservoir 202 and the second reservoir 212 through the first flow-rate adjuster 205 and the second flow-rate adjuster 215, respectively. Then, in the first reservoir 202, when the liquid level of the stored washing liquid becomes higher than the one end of the first overflow pipe 203, the washing liquid is discharged at an appropriate timing. Similarly, in the second reservoir 212, when the liquid level of the stored washing liquid becomes higher than the other end of the second overflow pipe 213, the washing liquid is discharged at an appropriate timing. Thus, the new washing liquid can be supplied at an appropriate timing while discharging the old washing liquid, so that the degree of contamination of the washing liquid can be kept low. As a result, the washing capability of the first cleaner 220 and the second cleaner 230 can be increased. Besides, effects similar to those of the first embodiment can be obtained.

### <4. Fourth Embodiment>

Fig. 4 is a schematic configuration view of an inkjet recording apparatus 300 according to a fourth embodiment of the present invention. In the example, the inkjet recording apparatus 300 of the present embodiment is different from the inkjet recording apparatus 200 according to the third embodiment in that a second overflow pipe 301 in a belt cleaning device 310 is different in configuration from the second overflow pipe 213 in the belt cleaning device 210. In Fig. 4, components corresponding to those of Figs. 1 to 3 are denoted with the same reference signs, and redundant description thereof will be omitted.

The belt cleaning device 310 of the present embodiment includes a first cleaner 320 and a second cleaner 330. The belt cleaning device 310 of the present embodiment is different from the belt cleaning device 210 of the third embodiment in that the other end of the second overflow pipe 301 that a second reservoir 212 is provided with is connected to a first reservoir 202.

The second overflow pipe 301 has one end and the other end. The second overflow pipe 301 is disposed such that its axial direction is parallel to the vertical direction of the second reservoir 212 inside the second reservoir 212 on the one end side, and disposed such that the one end is located at a predetermined height from the lower portion of the second reservoir 212. The other end of the second overflow pipe 301 is lower than the one end thereof in the vertical direction and is connected to the first reservoir 202. On the first reservoir 202 side, the other end of the second overflow pipe 301 is higher than the one end of the first overflow pipe 203 provided in the first reservoir 202 in the vertical direction and is connected to the first reservoir 202.

In the present embodiment, the washing liquid having overflowed from the second reservoir 212 is supplied to the first reservoir 202 through the second overflow pipe 301. The contamination of the washing liquid in the second cleaner 330 is slower in speed than that in the first cleaner 320. Thus, the washing liquid relatively cleaner than the washing liquid discharged to a first collector 51 in the first cleaner 320 can be supplied from the second reservoir 212 to the first reservoir 202. Therefore, the consumption speed of the new washing liquid supplied from a washing-liquid supply tank (not illustrated) can be made slow, and the discharge speed of the washing liquid discharged to a discharge tank (not illustrated) can be made slow. This arrangement allows the belt cleaning device 310 of the present embodiment to reuse the washing liquid with less contamination, so that the washing liquid can be used for a long time with a stable washing performance.

Besides, effects similar to those of the first embodiment can be obtained.

In each embodiment described above, given has been the example in which the adhesive layer is formed on the surface of the conveyance belt 3 and the recording medium is conveyed in close contact with the adhesive layer, but this is not limitative. For example, a belt cleaning device of the invention is applicable even in a case where a conveyance belt 3 holds a recording medium adsorbed due to static or holds a recording medium with friction or suction. In use of a conveyance belt having an adhesive layer as in the above embodiments, there is a characteristic that thread waste or the like is easily attached, and thus the configuration of the belt cleaning device of the present invention is more effective.

Further, in each embodiment described above, given has been the example in which the belt cleaning device includes two cleaners of the first cleaner and the second cleaner, but may include two or more cleaners. Also in this case, the effects of the present invention can be obtained as each cleaner includes the independent collector, and the washer and the scraper provided in this order downstream in the circumferential direction of the conveyance belt in the collector.

In the above embodiments, the second cleaner is provided with the auxiliary scraper 63b; however, the effects of the present invention can be obtained even in a configuration without the auxiliary scraper 63b. Further, an absorptive member including a sponge-like member may be disposed at the subsequent stage of the auxiliary scraper 63b of the second cleaner so as to abut on the surface of the conveyance belt, for example. This arrangement enables reliable removal of droplets on the surface of the conveyance belt 3.

The above embodiments have been described in detail in order to describe the present invention in an easy-to-understand manner, and thus are not necessarily limited to those having all the described configurations. For example, part of the configuration of an embodiment can be replaced with another configuration, or the configuration of an embodiment can have another configuration added thereto. Further, part of the configuration of an embodiment can have another configuration added thereto or replaced therewith, or can be omitted.

Although embodiments of the present invention have been described and illustrated in detail, the disclosed embodiments are made for purposes of illustration and example only and not limitation. The scope of the present invention should be interpreted by terms of the appended claims.

## Claims

1. A belt cleaning device (70, 110, 210, 310) configured to wash a placement face (3a) of a conveyance belt (3) endless, the conveyance belt (3) being configured to convey a recording medium placed on the placement face (3a) due to circumferential movement of the conveyance belt (3), the belt cleaning device (70, 110, 210, 310) comprising:
a plurality of washers (52, 58, 62, 68) configured to wash the placement face (3a) of the conveyance belt (3) while supplying washing liquid to the placement face (3a) of the conveyance belt (3);
a plurality of collectors (51, 61) provided so as to collect the washing liquid supplied to the placement face (3a) of the conveyance belt (3) by a respective washer (52, 58, 62, 68) of the plurality of washers (52, 58, 62, 68);
a plurality of removal members (53, 63a) provided for the plurality of collectors (51, 61), the plurality of removal members (53, 63a) each being disposed downstream of the corresponding washer (52, 58, 62, 68) in a circumferential direction of the conveyance belt (3), the plurality of removal members (53, 63a) each being configured to remove a residue remaining on the placement face (3a) of the conveyance belt (3);
a reservoir (202, 212) provided for each of the plurality of collectors (51, 61), the reservoir (202, 212) being configured to store the washing liquid collected by the corresponding collector (51, 61); and
an overflow pipe (203, 213, 301) provided to the reservoir (202, 212), the overflow pipe (203, 213, 301) being configured to maintain the washing liquid stored in the reservoir (202, 212) at a predetermined liquid level,
**characterized in that**
the overflow pipe (203, 213, 301) in the reservoir (202, 212) of a washer (52, 58, 62, 68) and respective collector (51, 61) further downstream of the conveyance belt (3) feeds washing liquid into the reservoir (202, 212) of a washer (52, 58, 62, 68) and respective collector (51, 61) further upstream of the conveyance belt (3).

2. The belt cleaning device (70, 110, 210, 310) according to claim 1,
wherein the plurality of washers (52, 58, 62, 68) each includes:
a sprayer (58, 68) configured to eject the washing liquid to the placement face (3a) of the conveyance belt (3); and
a brush (52, 62) configured to wash the placement face (3a) of the conveyance belt (3) to which the washing liquid has been ejected.

3. The belt cleaning device (70, 110, 210, 310) according to claim 2, further comprising:
a feeder (56, 66) configured to feedback, to the sprayer (58, 68), the washing liquid collected by the corresponding collector (51, 61).

4. The belt cleaning device (70, 110, 210, 310) according to claim 3, further comprising:
a filter (55a, 65a) provided in a flow path connecting the feeder (56, 66) and the collector (51, 61), the filter (55a, 65a) being configured to remove foreign matter having intruded in the washing liquid.

5. The belt cleaning device (70, 110, 210, 310) according to claim 1, further comprising:
an auxiliary removal member (63b) provided to a collector (51, 61) downstream in the circumferential direction of the conveyance belt (3), among the plurality of collectors (51, 61), the auxiliary removal member (63b) being downstream of the removal member (53, 63a) in the circumferential direction of the conveyance belt (3).

6. An inkjet recording apparatus (1, 100, 200, 300) comprising:
a conveyance belt (3) having a placement face (3a), the conveyance belt (3) being endless, the conveyance belt (3) being configured to convey a recording medium placed on the placement face (3a) due to circumferential movement of the conveyance belt (3);
a recording head (7) configured to inject ink to the recording medium placed on the conveyance belt (3), to form a desired image; and
the belt cleaning device (70, 110, 210, 310) according to any one of the claims 1 to 5.

7. The inkjet recording apparatus (1, 100, 200, 300) according to claim 6,
wherein the conveyance belt (3) has a surface, as the placement face (3a), provided with an adhesive layer for adhesively holding the recording medium.

## Patentansprüche

1. Bandreinigungsvorrichtung (70, 110, 210, 310) dazu eingerichtet eine Platzierungsfläche (3a) eines endlosen Förderbandes (3) zu waschen, wobei das Förderband (3) dazu eingerichtet ist ein Aufzeichnungsmedium zu befördern, das auf der Platzierungsfläche (3a) platziert ist, aufgrund einer Umfangsbewegung des Förderbandes (3), die Bandreinigungsvorrichtung (70, 110, 210, 310) umfassend:
eine Vielzahl von Wascheinrichtungen (52, 58, 62, 68) dazu eingerichtet ist die Platzierungsfläche (3a) des Förderbandes (3) zu waschen, während des Zuführens von Waschflüssigkeit zu der Platzierungsfläche (3a) des Förderbandes (3);
eine Vielzahl von Sammlern (51, 61) vorgesehen um die Waschflüssigkeit zu sammeln, die der Platzierungsfläche (3a) des Förderbandes (3) zugeführt ist, durch eine jeweilige Wascheinrichtung (52, 58, 62, 68) der Vielzahl von Wascheinrichtungen (52, 58, 62, 68);
eine Vielzahl von Entfernungselementen (53, 63a) vorgesehen für die Vielzahl von Sammlern (51, 61), die Vielzahl von Entfernungselementen (53, 63a) jeweils stromabwärts der entsprechenden Wascheinrichtung (52, 58, 62, 68) angeordnet, in einer Umfangsrichtung des Förderbandes (3), wobei die Vielzahl von Entfernungselementen (53, 63a) jeweils dazu eingerichtet einen auf der Platzierungsfläche (3a) des Förderbandes (3) verbleibenden Rückstand zu entfernen;
ein Reservoir (202, 212) vorgesehen für jeden der Vielzahl von Sammlern (51, 61), das Reservoir (202, 212) dazu eingerichtet die von dem entsprechenden Sammler (51, 61) gesammelte Waschflüssigkeit zu speichern; und
ein Überlaufrohr (203, 213, 301), das an dem Reservoir (202, 212) vorgesehen ist, wobei das Überlaufrohr (203, 213, 301) dazu eingerichtet ist die in dem Reservoir (202, 212) gespeicherte Waschflüssigkeit auf einem vorbestimmten Flüssigkeitspegel zu halten,
**dadurch gekennzeichnet, dass**
das Überlaufrohr (203, 213, 301) in dem Reservoir (202, 212) einer Wascheinrichtung (52, 58, 62, 68) und eines entsprechenden Sammlers (51, 61) weiter stromabwärts des Förderbandes (3) Waschflüssigkeit in das Reservoir (202, 212) einer Wascheinrichtung (52, 58, 62, 68) und eines entsprechenden Sammlers (51, 61) weiter stromaufwärts des Förderbandes (3) speist.

2. Bandreinigungsvorrichtung (70, 110, 210, 310) nach Anspruch 1,
wobei die Vielzahl von Wascheinrichtungen (52, 58, 62, 68) jeweils umfasst:
einen Sprüher (58, 68) dazu eingerichtet die Waschflüssigkeit auf die Platzierungsfläche (3a) des Förderbandes (3) auszustoßen; und
eine Bürste (52, 62) dazu eingerichtet, die Platzierungsfläche (3a) des Förderbandes (3) zu waschen, auf die die Waschflüssigkeit ausgestoßen ist.

3. Bandreinigungsvorrichtung (70, 110, 210, 310) nach Anspruch 2, ferner umfassend:
eine Zuführeinrichtung (56, 66) dazu eingerichtet, dem Sprüher (58, 68) die Waschflüssigkeit wieder zuzuführen, die von dem entsprechenden Sammler (51, 61) gesammelt wird.

4. Bandreinigungsvorrichtung (70, 110, 210, 310) nach Anspruch 3, ferner umfassend:
einen Filter (55a, 65a), der in einem Strömungsweg vorgesehen ist, der die Zuführeinrichtung (56, 66) und den Sammler (51, 61) verbindet, wobei der Filter (55a, 65a) dazu eingerichtet ist in die Waschflüssigkeit eingedrungene Fremdstoffe zu entfernen.

5. Bandreinigungsvorrichtung (70, 110, 210, 310) nach Anspruch 1, ferner umfassend:
ein Hilfsentfernungselement (63b), das an einem Sammler (51, 61) vorgesehen ist stromabwärts in der Umfangsrichtung des Förderbandes (3) unter der Vielzahl von Sammlern (51, 61), wobei das Hilfsentfernungselement (63b) stromabwärts des Entfernungselements (53, 63a) in der Umfangsrichtung des Förderbandes (3) angeordnet ist.

6. Tintenstrahlaufzeichnungsgerät (1, 100, 200, 300) umfassend:
ein Förderband (3) mit einer Platzierungsfläche (3a), wobei das Förderband (3) endlos ist, wobei das Förderband (3) dazu eingerichtet ist ein auf der Platzierungsfläche (3a) platziertes Aufzeichnungsmedium zu fördern, aufgrund einer Umfangsbewegung des Förderbandes (3);
einen Aufzeichnungskopf (7) dazu eingerichtet Tinte auf das auf dem Förderband (3) platzierte Aufzeichnungsmedium zu spritzen, um ein gewünschtes Bild zu erzeugen; und
die Bandreinigungsvorrichtung (70, 110, 210, 310) nach einem der Ansprüche 1 bis 5.

7. Tintenstrahlaufzeichnungsgerät (1, 100, 200, 300) nach Anspruch 6,
wobei das Förderband (3) eine Oberfläche, als die Platzierungsfläche (3a), aufweist, die mit einer Klebeschicht vorgesehen ist, um das Aufzeichnungsmedium klebend zu halten.

## Revendications

1. Dispositif de nettoyage de bande (70, 110, 210, 310) configuré pour laver une face de placement (3a) d'une bande transporteuse (3) sans fin, la bande transporteuse (3) étant configurée pour transporter un support d'enregistrement placé sur la face de placement (3a) moyennant un mouvement circonférentiel de la bande transporteuse (3), le dispositif de nettoyage de bande (70, 110, 210, 310) comprenant :
une pluralité de nettoyeurs (52, 58, 62, 68) configurés pour laver la face de placement (3a) de la bande transporteuse (3) tout en fournissant un liquide de lavage à la face de placement (3a) de la bande transporteuse (3) ;
une pluralité de collecteurs (51, 61) prévus pour recueillir le liquide de lavage fourni à la face de placement (3a) de la bande transporteuse (3) par un nettoyeur respectif (52, 58, 62, 68) de la pluralité de nettoyeurs (52, 58, 62, 68) ;
une pluralité d'éléments d'enlèvement (53, 63a) prévus pour la pluralité de collecteurs (51, 61), chacun de la pluralité d'éléments d'enlèvement (53, 63a) étant disposé en aval du nettoyeur (52, 58, 62, 68) correspondant dans une direction circonférentielle de la bande transporteuse (3), chacun de la pluralité d'éléments d'enlèvement (53, 63a) étant configuré pour enlever un résidu restant sur la face de placement (3a) de la bande transporteuse (3) ;
un réservoir (202, 212) prévu pour chacun de la pluralité de collecteurs (51, 61), le réservoir (202, 212) étant configuré pour stocker le liquide de lavage recueilli par le collecteur (51, 61) correspondant ; et
un tuyau de trop-plein (203, 213, 301) fourni au réservoir (202, 212), le tuyau de trop-plein (203, 213, 301) étant configuré pour maintenir le liquide de lavage stocké dans le réservoir (202, 212) à un niveau de liquide prédéterminé, **caractérisé en ce que**
le tuyau de trop-plein (203, 213, 301) dans le réservoir (202, 212) d'un nettoyeur (52, 58, 62, 68) et collecteur respectif (51, 61) plus en aval de la bande transporteuse (3) achemine du liquide de lavage dans le réservoir (202, 212) d'un nettoyeur (52, 58, 62, 68) et collecteur respectif (51, 61) plus en amont de la bande transporteuse (3).

2. Dispositif de nettoyage de bande (70, 110, 210, 310) selon la revendication 1,
dans lequel chacun de la pluralité de nettoyeurs (52, 58, 62, 68) comprend:
un pulvérisateur (58, 68) configuré pour éjecter le liquide de lavage sur la face de placement (3a) de la bande transporteuse (3) ; et
une brosse (52, 62) configurée pour laver la face de placement (3a) de la bande transporteuse (3) sur laquelle le liquide de lavage a été éjecté.

3. Dispositif de nettoyage de bande (70, 110, 210, 310) selon la revendication 2, comprenant en outre :
un dispositif d'alimentation (56, 66) configuré pour renvoyer, vers le pulvérisateur (58, 68), le liquide de lavage recueilli par le collecteur correspondant (51, 61).

4. Dispositif de nettoyage de bande (70, 110, 210, 310) selon la revendication 3, comprenant en outre :
un filtre (55a, 65a) prévu dans une voie d'écoulement reliant le dispositif d'alimentation (56, 66) et le collecteur (51, 61), le filtre (55a, 65a) étant configuré pour éliminer des corps étrangers s'étant introduits dans le liquide de lavage.

5. Dispositif de nettoyage de bande (70, 110, 210, 310) selon la revendication 1, comprenant en outre :
un élément d'enlèvement auxiliaire (63b) fourni à un collecteur (51, 61) en aval dans la direction circonférentielle de la bande transporteuse (3), parmi la pluralité de collecteurs (51, 61), l'élément d'enlèvement auxiliaire (63b) étant situé en aval de l'élément d'enlèvement (53, 63a) dans la direction circonférentielle de la bande transporteuse (3).

6. Appareil d'enregistrement à jet d'encre (1, 100, 200, 300) comprenant :
une bande transporteuse (3) ayant une face de placement (3a), la bande transporteuse (3) étant sans fin, la bande transporteuse (3) étant configurée pour transporter un support d'enregistrement placé sur la face de placement (3a) moyennant un mouvement circonférentiel de la bande transporteuse (3) ;
une tête d'enregistrement (7) configurée pour injecter de l'encre sur le support d'enregistrement placé sur la bande transporteuse (3), afin de former une image souhaitée ; et
le dispositif de nettoyage de bande (70, 110, 210, 310) selon l'une quelconque des revendications 1 à 5.

7. Appareil d'enregistrement à jet d'encre (1, 100, 200, 300) selon la revendication 6,
dans lequel la bande transporteuse (3) a comme face de placement (3a) une surface pourvue d'une couche adhésive pour maintenir de manière adhésive le support d'enregistrement.
